Europäisches Patentamt

European Patent Office

Office européen des brevets

(19)

(11) EP 1 395 061 A1

(12) EUROPEAN PATENT APPLICATION

(43) Date of publication:
03.03.2004 Bulletin 2004/10

(51) Int Cl.7: H04N 7/68

(21) Application number: 02255942.1

(22) Date of filing: 27.08.2002

(84) Designated Contracting States:
AT BE BG CH CY CZ DE DK EE ES FI FR GB GR
IE IT LI LU MC NL PT SE SK TR
Designated Extension States:
AL LT LV MK RO SI

(71) Applicants:
• Mitsubishi Electric Information Technology
Centre Europe B.V.
Guildford, Surrey GU2 5YD (GB)
• MITSUBISHI DENKI KABUSHIKI KAISHA
Chiyoda-ku Tokyo-to, 100 (JP)

(72) Inventors:
• Ghanbari, Soroush
Stocton Close, Guildford, GU1 1HS (GB)
• Cieplinski, Leszek
Guildford, GU1 2UF (GB)

(74) Representative: Burke, Steven David et al
R.G.C. Jenkins & Co.
26 Caxton Street
London SW1H 0RJ (GB)

(54) **Method and apparatus for compensation of erroneous motion vectors in video data**

(57) A method of approximating a motion vector for an image block comprises deriving a first set of vectors from motion vectors of neighbouring blocks in the same frame and the corresponding block and its neighbouring blocks in one or more preceding and/or subsequent frames, deriving a set of candidate vectors from one or more of motion vectors of neighbouring blocks in the same frame and the corresponding block and its neighbouring blocks in one or more preceding and/or subsequent frames, analysing said first set of vectors, and selecting one of the candidate vectors on the basis of the analysis.

Figure 6

EP 1 395 061 A1

**Description**

The invention relates to a method and apparatus for processing image data. The invention relates especially to a method of processing image data to compensate for errors occurring, for example, as a result of transmission or recording or storage. The invention is particularly concerned with errors in motion vectors.

Image data, especially video bitstreams, are very sensitive to errors. For example, a single bit error in a coded video bitstream can result in serious degradation in the displayed picture quality. Error correction schemes are known and widely used, but they are not always successful. When errors, for example, bit errors occurring during transmission, cannot be fully corrected by an error correction scheme, it is known to use error detection and concealment to conceal the corruption of the image caused by the error.

Known types of error concealment algorithms fall generally into two classes: spatial concealment and temporal concealment. In spatial concealment, missing data are reconstructed using neighbouring spatial information while in temporal concealment they are reconstructed using data in previous frames.

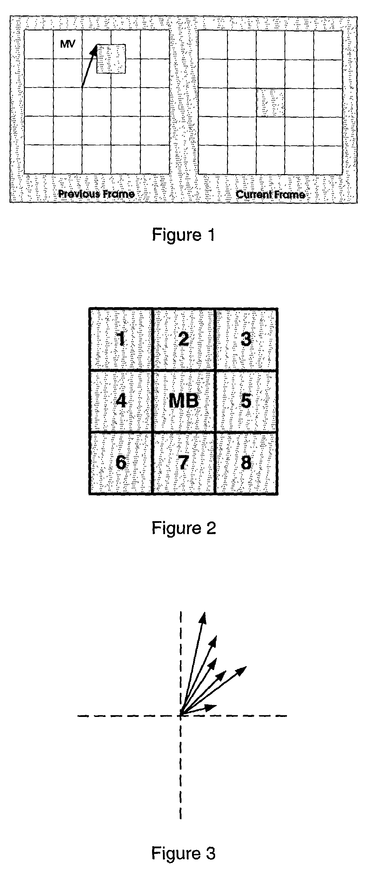

One known method of performing temporal concealment by exploiting the temporal correlation in video signals is to replace a damaged macroblock (MB) by the spatially corresponding MB in the previous frame, as disclosed in US 5,910,827. This method is referred to as the copying algorithm. Although this method is simple to implement, it can produce bad concealment in areas where motion is present. Significant improvement can be obtained by replacing a damaged MB with a motion-compensated block from the previous frame. Fig. 1 illustrates this technique. However, in order to do this successfully, the motion vector is required, and the motion vector may not be available if the macroblock data has been corrupted.

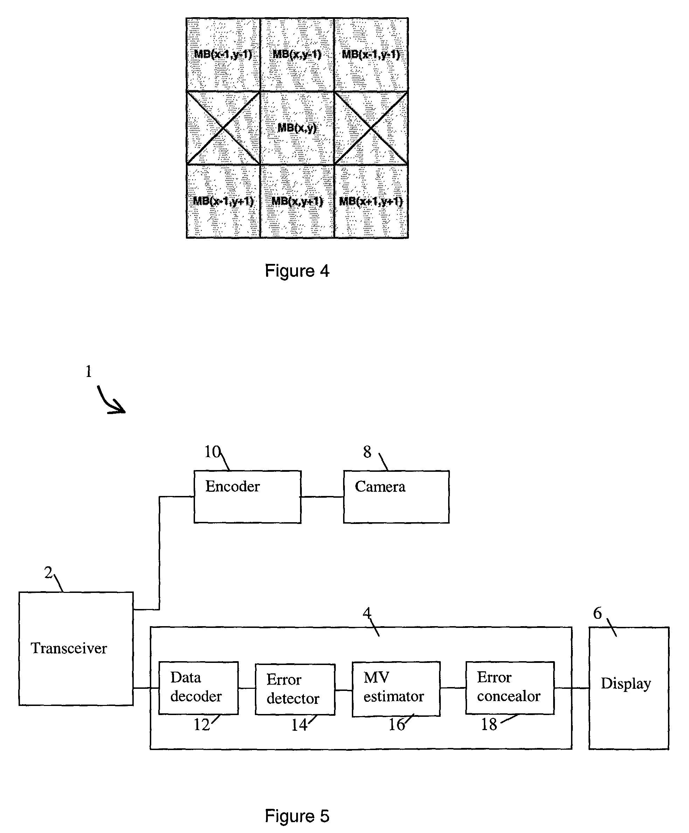

Fig. 2 shows a central MB with its 8 neighbouring blocks. When a motion vector is lost, it can be estimated from the motion vectors of neighbouring MBs. That is because normally the motion vectors of the MBs neighbouring a central MB as shown in Fig. 2 are correlated to some extent to the central MB, because neighbouring MBs in an image often move in a similar manner. Fig. 3 illustrates motion vectors for neighbouring MBs pointing in a similar direction. US 5,724,369 and US 5,737,022 relate to methods where damaged motion vectors are replaced by a motion vector from a neighbouring block. It is known to derive an estimate of the motion vector for the central MB from average (ie mean or median) of the motion vectors of neighbouring blocks, as disclosed in US 5,912,707. When a given MB is damaged, it is likely that the horizontally adjacent MBs are also damaged, as illustrated in Fig. 4. Thus, those motion vectors may be omitted from the averaging calculation.

Generally speaking, the median is preferred to the mean, but it requires a significant amount of processing power. Such a computationally expensive approach may be particularly undesirable for certain applications, such as mobile telephones.

It is an object of the invention to provide a method of concealing a damaged motion vector that gives similar results to the best prior art techniques, but using less processing power.

Generally, the invention provides a method of approximating a lost or damaged motion vector for an image block comprising deriving a first set of vectors from motion vectors of neighbouring blocks in the same frame and the corresponding block and its neighbouring blocks in one or more preceding and/or subsequent frames, deriving a set of candidate vectors from one or more of motion vectors of neighbouring blocks in the same frame and the corresponding block and its neighbouring blocks in one or more preceding and/or subsequent frames, analysing said first set of vectors, and selecting one of the candidate vectors on the basis of the analysis.

In other words, one of the candidate vectors, which are taken from the motion vectors for blocks which neighbour the image block of interest either spatially and/or temporally, is selected. The selection in based on an analysis of motion vectors for blocks which neighbour the image block of interest either spatially and/or temporally, which may be performed in a number of ways, as discussed below. Because the selected vector is taken from the candidate vectors as described above, the selected vector is likely to have some correlation with the true motion vector of the image block of interest. The selection is usually based on a comparison, so that the processing can be made relatively simple. Because the selection involves an analysis of the temporally and/or spatially neighbouring vectors, as discussed below, the results are more accurate than in prior art techniques, such as those which always used the motion vector of the horizontally adjacent block or of the corresponding block in the preceding frame.

According to a first preferred aspect, the invention provides a method of approximating a motion vector for an image block comprising deriving an estimated motion vector, comparing the candidate vectors with the estimated motion vector and selecting one of the candidate vectors on the basis of similarity to said estimated vector.

The candidate vectors may include, for example, the motion vectors for some or all of the image blocks neighbouring the image block in the same frame, the motion vector of the corresponding image block in a preceding and/or subsequent frame, and the motion vectors of its neighbouring blocks. Similarly, the estimated motion vector may be selected or derived from for example, the motion vectors for some or all of the image blocks neighbouring the image block in the same frame, the motion vector of the corresponding image block in a preceding and/or subsequent frame, and the motion vectors of its neighbouring blocks. The set of vectors used to derive the estimated motion vector may be the same as the set of vectors used as candidate vectors. The set of vectors used to derive the estimated vector may have only a single member, such as the motion vector of the corresponding block in the preceding frame, but the set of candidate vectors has at least two members.

The selection of a motion vector based on similarity may be based on similarity by size and/or direction but is preferably based on distance. Preferably, the candidate vector which is the smallest distance from the estimated vector is selected.

The estimated vector may be, for example, the mean of a set of vectors, such as some or all of the candidate vectors. The candidate vectors may be a subset of the set of vectors used to derive the estimated vectors. The mean may be a weighted mean, which can improve the accuracy.

According to a second preferred aspect, the invention provides a method of replacing a lost or damaged motion vector for an image block comprising comparing or correlating the motion vectors of neighbouring image blocks in the same frame with the corresponding motion vectors in the preceding or subsequent frame, and determining the replacement of the lost vector according to the results of the comparison or correlation. Generally, the motion vector of the corresponding block in the previous frame is selected, if there is a high correlation between frames. In other words, the candidate set consists of the motion vector of the corresponding block in the previous frame.

For example, if there is a high correlation between blocks in different frames, it is likely that the lost or damaged motion vector can reliably be replaced by the motion vector of the spatially corresponding motion vector in a temporally neighbouring frame.

The candidate set for selection of the replacement motion vector can vary according to the degree of correlation between frames. For example, if there is a medium amount of correlation, the candidate set consists of motion vectors from neighbouring blocks in the same frame and the motion vector of the corresponding block in the previous frame. If there is low correlation, the motion vector from the previous frame is excluded, and the candidate set is based on neighbouring blocks in the same frame.

As a result of the invention, a relatively accurate indication of a damaged motion vector can be derived, at relatively low processing costs. This is especially useful in applications where it is useful to reduce processing costs, such as mobile phones.

Embodiments of the invention will be described with reference to the accompanying drawings, of which:

Fig. 1 is an illustration of macroblocks in adjacent frames;
Fig. 2 is an illustration of blocks spatially neighbouring a central block;
Fig. 3 is a motion vector graph;
Fig. 4 is an illustration of neighbouring blocks;
Fig. 5 is a schematic block diagram of a mobile phone;
Fig. 6 is a flow diagram;
Fig. 7 is a diagram illustrating neighbouring blocks;
Fig. 8 is a motion vector graph showing motion vectors;
Fig. 9 is a diagram illustrating weighting of neighbouring blocks;
Fig. 10 is a diagram corresponding to Fig. 9 illustrating weighting of blocks;
Fig. 11 is a diagram illustrating corresponding macroblocks in two successive frames;
Fig. 12 is a diagram corresponding to Fig. 11 illustrating weighting of blocks;
Fig. 13 is a diagram illustrating weighting of motion vectors according to distance;
Fig. 14 is a diagram of motion vectors;
Fig. 15 is another diagram of motion vectors;
Fig. 16 is another diagram of motion vectors;
Fig. 17 is another diagram of motion vectors;
Fig. 19 is a diagram of corresponding macroblocks in two successive frames.

Embodiments of the invention will be described in the context of a mobile videophone in which image data captured by a video camera in a first mobile phone is transmitted to a second mobile phone and displayed.

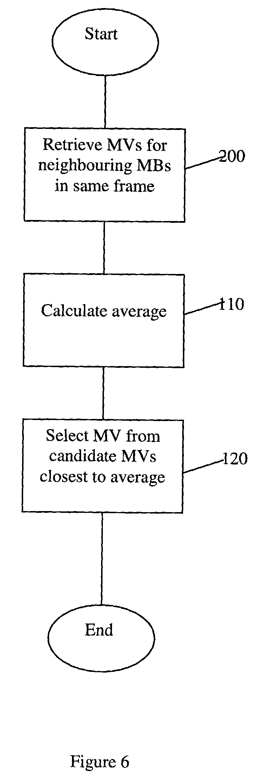

Fig. 5 schematically illustrates the pertinent parts of a mobile videophone 1. The phone 1 includes a transceiver 2 for transmitting and receiving data, a decoder 4 for decoding received data and a display 6 for displaying received images. The phone also includes a camera 8 for capturing images of the user and a coder 10 for encoding the captured images.

The decoder 4 includes a data decoder 12 for decoding received data according to the appropriate coding technique, an error detector 14 for detector errors in the decoded data, a motion vector estimator, 16 for estimating damaged motion vectors, and an error concealer 18 for concealing errors according to the output of the motion vector estimator.

A method of decoding received image data for display on the display 6 according to a first embodiment of the invention will be described below.

Image data captured by the camera 8 of the first mobile phone is coded for transmission using a suitable known technique using frames, macroblocks and motion compensation, such as an MPEG-4 technique, for example. The coded data is then transmitted.

The image data is received by the second mobile phone and decoded by the data decoder 12. As in the prior art, errors occurring in the transmitted data are detected by the error detector 14 and corrected using an error correction scheme where possible. Where it is not possible to correct errors in motion vectors, an estimation method is applied, as described below with reference to the flow chart in Fig. 6, in the motion vector estimator 16.

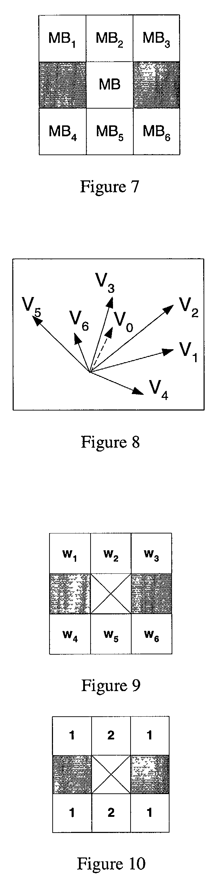

Suppose an error occurs in a macroblock MB and in the corresponding motion vector. The motion vectors (MVs) for 6 neighbouring MBs in the same frame are retrieved (step 100). As shown in Figs. 7 and 8, the neighbouring MBs, MB1 to MB6 have corresponding MVs V1 to V6, and MVs V1 to V6 form the set of candidate MVs. In Fig. 7, the MBs that are horizontally adjacent to MB are excluded, on the assumption that they are also damaged. However, if the horizontally adjacent motion vectors are not damaged, they may be included in the estimation.

In the next step (step 110), the average (mean) of the candidate MVs is calculated, and is used as an estimated MV for the damaged MB. The average for the candidate vectors V1 to V6 is V0 as shown in Fig. 8. In step 120, each MV in the set of candidate MVs is compared with the estimated MV (average V0), and the candidate MV that is closest to V0 is selected.

In the present embodiment, the closest vector ($V_{nearest}$) to the average ($V_0$) of neighbouring MVs is defined using the following expression:

$$V_{nearest} : \min_{k} \left\{ \left(V_{k,x} - V_{0,x}\right)^2 + \left(V_{k,y} - V_{0,y}\right)^2 \right\}$$

For the candidate vectors V1 to V6, the closest vector to the mean vector V0 is V3.

The damaged MB is then replaced with the MB in the preceding frame corresponding to the selected motion vector, V3. The full image including the replacement MB is finally displayed on the display 6.

The embodiment described above is computationally simpler than the Vector Median method. To illustrate this, consider a case of n vectors $V_1$, $V_2$, $V_3$, ... Vn. The Vector Median ($V_{med}$) is calculated as:

$$V_{med} : \min_{k} \sum_{i \in \{1,...,n\}, i \neq k} \left(V_{k,x} - V_{i,x}\right)^2 + \left(V_{k,y} - V_{i,y}\right)^2 \qquad (1)$$

According to the embodiment, the closest vector ($V_{nearest}$) to the average ($V_0$) of neighbouring MVs is calculated as:

$$V_{nearest} : \min_{k} \left\{ \left(V_{k,x} - V_{0,x}\right)^2 + \left(V_{k,y} - V_{0,y}\right)^2 \right\} \qquad (2)$$

With six neighbouring MVs, the Median Vector technique requires 30 multiplications and 75 additions. With the above embodiment, only 14 multiplications and 28 additions are required. Since multiplications are much more expensive than additions, then the proposed technique is at least two times faster than the Vector Median. This is a great advantage where the processing power is limited. Even if the processing power of the receiver can handle the Vector Median requirement, by reducing the complexity by a factor of 2, it is possible for the user to either use a slower (and hence cheaper) processor, or run the same processor at slower speed, hence consuming less power.

A second embodiment of the invention will now be described.

The second embodiment is similar to the first embodiment. However, in the second embodiment, a weighted mean is used.

As shown in Figs. 9 and 10, a weight is allocated to the MV of each neighbouring MB. A weighted average is calculated in step 110, using the following equation.

$$v_0 = \frac{1}{W} \sum_{i=0}^{N-1} \left( w_i * v_i \right) \qquad \textbf{\textit{where}} \qquad W = \sum_{i=0}^{N-1} w_i \quad (3)$$

The neighbouring motion vector that is closest to this weighted average is then selected to represent the missing motion vector, as in the first embodiment.

In the present embodiment, weighting is performed according to the position of the MBs in the frame relative to the damaged block.

Typically, the motion vectors from the blocks immediately above (MB$_2$) and below (MB$_5$) the erroneous block (MB) are closer to the corrupted block (MB) than the remaining vectors. Thus it is sometimes preferable to bias towards the motion vectors of these MBs. As shown in Fig. 10, these two blocks (MB$_2$, MB$_5$) are given more weight than the other surrounding blocks (MB$_1$, MB$_3$, MB$_4$, MB$_6$). As a result, the estimated missing motion vector is expected to be more in the direction of MB2 and/or MB5 motion vectors.

A third embodiment will now be described.

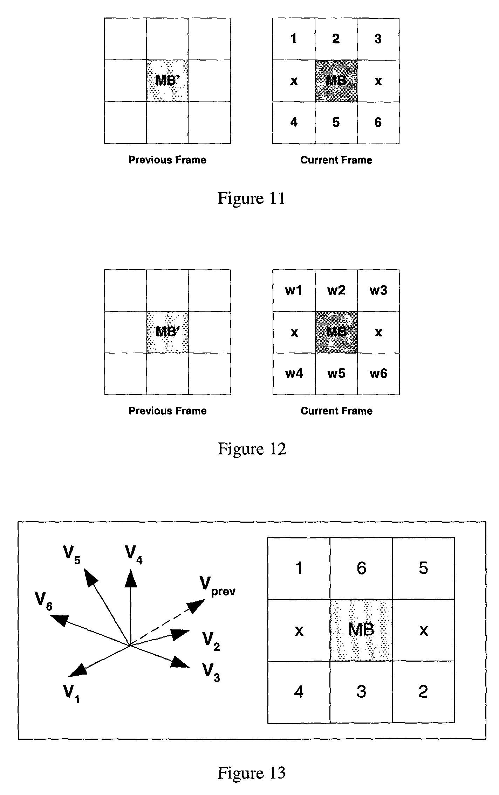

The third embodiment is similar to the second embodiment, but uses a different weighting, using information from the previous frame. More specifically, the weighting uses information about the motion vector Vprev of the MB (MB') in the previous frame corresponding to the damaged MB (see Fig. 11).

More specifically, the distance of each of the candidate vectors (the six neighbouring blocks in the current frame) V1 to V6 from the motion vector of the block in the previous frame Vprev is calculated, and the blocks MB1 to MB6 and the corresponding MVs V1 to V6 are weighted according to the distance between Vi and Vprev (see Figs. 12 and 13) As shown in Fig. 13, the order of the candidate vectors in terms of distance from Vprev is V2, V3, V4, V5, V6, and V1, and the motion vectors are weighted accordingly.

With each vector having a different weighting according to their distance to V$_{prev}$ equation 3 above is used to calculate a new weighted Mean. The neighbouring motion vector that is closest to this weighted average is then selected to represent the missing MV.

Additionally, the motion vector of block (MB') of the previous frame can also be included in the weighted average, for example with a higher weight (e.g. w=7). In other words, Vprev can be included in the set of candidate vectors.

This method has the advantage that, since similarity of the neighbouring motion vectors to a known motion vector at the previous frame is given, then it gives a more accurate weighting. The computational complexity compared with the normal weighting is not reduced, but the accuracy of weighting is increased.

The efficiency of this approach depends on the correlation between the motion vectors of the successive frames. At low frame rates, where this correlation is low, a superior performance over the method with equal weights is not expected. At high frame rates (e.g. 12.5 fps or above), this weighted mean of embodiment 3 is used, and for lower frame rates, the mean of embodiment 1 or 2 is used.

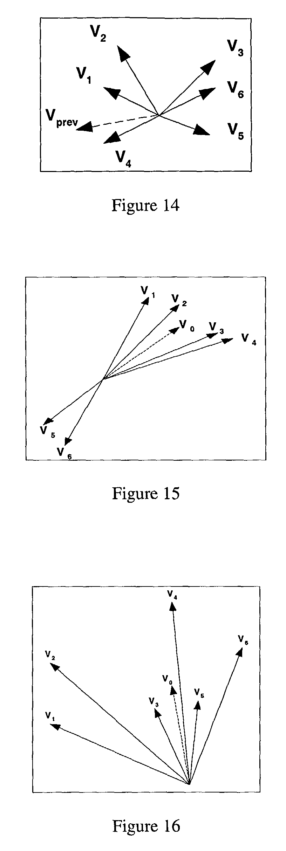

According to a fourth embodiment, a candidate set of MVs is derived from the MVs (V1 to V6) of neighbouring blocks, as in the first embodiment. However, the fourth embodiment uses the motion vector from the block positioned spatially in the previous frame (see Fig. 11) as the estimated MV. The closest motion vector in the current frame, ie the closest vector in the candidate set, to the motion vector of the block in the previous frame is used as the best candidate for the missing MV (see Fig. 14). This is similar to taking the median from the motion vector in the previous frame. This method, when compared with the previous known methods has the advantage that no mean is required to be taken. Hence the computational complexity is reduced further.

Referring to Fig. 14, the motion vector V$_4$ in the current frame is the closest vector to motion vector in the previous frame V$_{prev}$. Hence Vector V$_4$ is used as the replacement for the vector of the damaged block (MB).

In each of the embodiments described above, only the closest MV is selected. However, this potentially exclude other MVs that may be close to the estimated vector. In a variation of each of the above embodiments, it is also possible to choose other vectors that are close to the estimated vector to replace for the lost MV. There can be a situation where more than two vectors are close to the estimated vector. As depicted in figure 15, the vectors V$_1$, V$_2$, V$_3$, and V$_4$ are close to vector V$_0$. Therefore any of these four vectors can be chosen for the replacement for the missing vector.

Comparison of multiple vectors near to the estimated vector incurs a processing overhead. To avoid increasing computation time, only the first or the second nearest vector to the estimated vector are considered as potential candidates for missing vector.

For example in Fig. 16, vectors V$_3$ and V$_5$ are close to the estimated vector V$_0$. As a result, either vector V$_3$ or V$_5$ can be chosen to replace the lost vector.

In a further variation, motion boundaries are identified and taken into account.

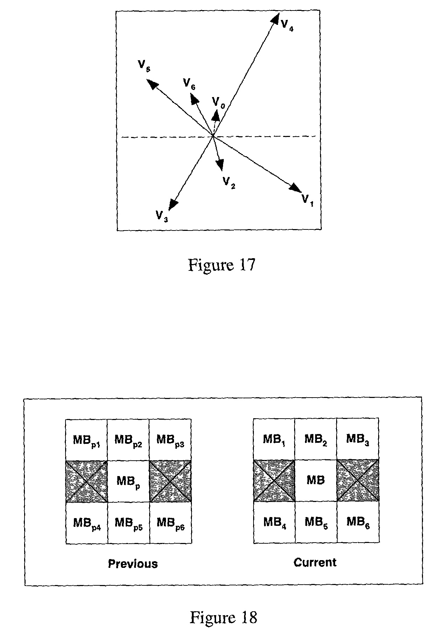

For a motion boundary scenario, such as that shown in figure 17, vectors that are close to motion boundary are of interest. In figure 17, the vectors that are close to the motion boundary are $V_6$ and $V_2$. Since these two vectors are very close to the estimated vector $V_0$, either of these two vectors can be chosen as the replacement for the missing vector.

A fifth embodiment of the invention will now be described.

Using a motion analysis measurement, six correlation measurements are generated to determine if the neighbouring blocks in the current frame have the same type of motion as the spatially corresponding blocks in their previous frame. If the criterion is satisfied, the lost MV is replaced by the MV of the spatially corresponding block in the previous frame.

The motion vectors utilized in the analysis are the surrounding vectors in the current frame and the spatially corresponding MVs in the previous frame as depicted in figure 18.

A vector correlation measure is calculated between two vectors by, for example, by calculating their angular difference as follows:

$$v(i) = \cos(angle\ between\ Vcurr(i)\ \&\ Vprev(i)) \tag{4}$$

After each pair of blocks (as referred to figure 18: $MB_1$, $MB_{p1}$; $MB_2$, $MB_{p2}$; etc.) is examined the overall correlation measure is generated as follows:

$$r = \frac{\sum_{i=0}^{n-1} v(i)}{n} \tag{5}$$

If r is greater than a threshold TH_high (e.g. TH=0.8), indicating a high degree of neighbouring motion correlation between consecutive frames, the replacement of the missing MV is achieved by using the motion vector of the block spatially positioned in the previous frame.

If TH_medium < correlation <=TH_high, then the spatially adjacent motion vectors as well as the motion vector from the previous frame are used in the selection of a replacement MV, such as in one of the embodiments described above.

If Correlation <= TH_medium, then only the spatially adjacent motion vectors are used to derive and select the replacement vector.

At high frame rates, motion in successive frames becomes highly correlated. Hence information from the previous frame can help to select the best motion vector in the current frame.

In other words, the above embodiment decides automatically whether spatially adjacent motion vectors or the corresponding motion vector(s) from the previous frame will form better candidates for error concealment. The correlation between the corresponding motion vectors in the current and a previous frame or frames guides the selection process.

Examples of applications of the invention include videophones, videoconferencing, digital television, digital high-definition television, mobile multimedia, broadcasting, visual databases, interactive games. Other applications involving image motion where the invention could be used include mobile robotics, satellite imagery, biomedical techniques such as radiography, and surveillance. The invention is especially useful in applications where it is desirable to keep the processing low, while retaining high quality visual results, such as in mobile applications.

It can be shown that techniques according to the invention produce results, for example, in terms of peak signal to noise ratio, for various image formats and types of image sequences, ie different types of motion activity, that are similar to the prior art median approach, but which are considerably less computationally expensive, and are better than other prior art techniques, such as simply selecting a known MV, such as the horizontally neighbouring MV, the corresponding MV in the previous frame or a zero vector. Embodiments of the invention include selection of a MV on the basis of it's similarity to another estimated MV. The similarity can be based on distance, as described, and/or other factors such as size and/or direction. The above embodiments refer to MVs taken from the previous frame. Similarly, MVs can be used from a subsequent frame, and also other frames further spaced in time and which require less computation than median. The calculation of the vector median requires 30M + 75A, where embodiment 2 requires 14M + 30A, and embodiment 1 requires 14M+28A, which is half the number of computations required for the median (here M=multiplication, A=addition).

Simple loss concealment techniques such as setting to zero copying from the previous frame or from above do not produce good results, especially bearing in mind that for small picture resolutions eg QCIF, there is little correlation between neighbouring motion vectors.

**Claims**

1. A method of approximating a motion vector for an image block comprising deriving a first set of vectors from motion vectors of neighbouring blocks in the same frame and the corresponding block and its neighbouring blocks in one or more preceding and/or subsequent frames, deriving a set of candidate vectors from one or more of motion vectors of neighbouring blocks in the same frame and the corresponding block and its neighbouring blocks in one or more preceding and/or subsequent frames, analysing said first set of vectors, and selecting one of the candidate vectors on the basis of the analysis.

2. A method as claimed in claim 1 comprising comparing candidate vectors with a vector or vectors selected or derived from the first set of vectors.

3. A method as claimed in claim 1 or claim 2 wherein the first set of vectors and the set of candidate vectors are the same.

4. A method as claimed in any preceding claim comprising deriving an estimated motion vector from the first set of vectors, comparing the candidate vectors with the estimated motion vector and selecting one of the candidate vectors on the basis of similarity to said estimated vector.

5. A method as claimed in claim 4 wherein the similarity to the estimated vector is defined in terms of distance and/or size and/or direction.

6. A method as claimed in claim 4 or claim 5 wherein the vector that is closest or second closest to the estimated vector is selected.

7. A method as claimed in any one of claims 4 to 6 wherein the estimated motion vector is the mean of two or more or all of the elements of said first set.

8. A method as claimed in claim 7 wherein the mean is a weighted mean.

9. A method as claimed in claim 8 wherein motion vectors of neighbouring blocks are weighted according to their position in relation to said image block and/or their similarity to the motion vector of the block corresponding to said image block in the preceding or subsequent frame.

10. A method as claimed in any preceding claim wherein the selection takes into account motion boundaries.

11. A method as claimed in any preceding claim wherein said analysis comprises comparing the motion vectors of neighbouring image blocks in the same frame with the corresponding motion vectors in the preceding or subsequent frame, and determining the approximation of motion vector according to the results of the comparison.

12. A method as claimed in claim 11 comprising approximating the motion vector using the motion vector of the corresponding block in the preceding or subsequent frame when said comparison indicates a high correlation between the neighbouring motion vectors in the preceding or subsequent frame.

13. A method as claimed in claim 11 or claim 12 comprising approximating the motion vector using motion vectors for neighbouring blocks in the same frame when said comparison indicates a low correlation between frames.

14. A method as claimed in any one of claims 11 to 13 comprising approximating the motion vector using motion vectors from neighbouring blocks in the same frame and motion vectors in the preceding or subsequent frame.

15. A computer program for executing a method as claimed in any preceding claim.

16. A data storage medium storing a computer program as claimed in claim 15.

17. Apparatus adapted to execute a method as claimed in any one of claims 1 to 15.

**18.** Apparatus as claimed in claim 17 comprising a data decoding means, error detecting means, a motion vector estimator and error concealing means.

**19.** A receiver for a communication system or a system for retrieving stored data comprising an apparatus as claimed in claim 17 or claim 18.

**20.** A receiver as claimed in claim 19 which is a mobile videophone.

Figure 1

Figure 2

Figure 3

Figure 4

Figure 5

Figure 6

| MB₁ | MB₂ | MB₃ |
|-----|-----|-----|
|     | MB  |     |
| MB₄ | MB₅ | MB₆ |

Figure 7

Figure 8

| w₁ | w₂ | w₃ |
|----|----|----|
|    |    |    |
| w₄ | w₅ | w₆ |

Figure 9

| 1 | 2 | 1 |
|---|---|---|
|   |   |   |
| 1 | 2 | 1 |

Figure 10

Figure 11

Figure 12

Figure 13

Figure 14

Figure 15

Figure 16

Figure 17

Figure 18

European Patent
Office

Application Number

EP 02 25 5942

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | CHALIDABHONGSE J ET AL: "FAST MOTION VECTOR ESTIMATION USING MULTIRESOLUTION-SPATIO TEMPORALCORRELATIONS" IEEE TRANSACTIONS ON CIRCUITS AND SYSTEMS FOR VIDEO TECHNOLOGY, IEEE INC. NEW YORK, US, vol. 7, no. 3, 1 June 1997 (1997-06-01), pages 477-488, XP000690586 ISSN: 1051-8215 | 1-6, 10-17 | H04N7/68 |
| Y | * paragraph [00IV] * | 7-9, 18-20 | |
| Y | JAE-WON SUH ET AL: "Recovery of motion vectors for error concealment" TENCON 99. PROCEEDINGS OF THE IEEE REGION 10 CONFERENCE CHEJU ISLAND, SOUTH KOREA 15-17 SEPT. 1999, PISCATAWAY, NJ, USA,IEEE, US, 15 September 1999 (1999-09-15), pages 750-753, XP010368320 ISBN: 0-7803-5739-6 | 7-9 | |
| A | * paragraph [0III] * | 1-6, 10-20 | **TECHNICAL FIELDS SEARCHED (Int.Cl.7)**<br><br>H04N |
| Y | JIAN ZHANG ET AL: "Video error concealment using decoder motion vector estimation" TENCON '97. IEEE REGION 10 ANNUAL CONFERENCE. SPEECH AND IMAGE TECHNOLOGIES FOR COMPUTING AND TELECOMMUNICATIONS., PROCEEDINGS OF IEEE BRISBANE, QLD., AUSTRALIA 2-4 DEC. 1997, NEW YORK, NY, USA,IEEE, US, 2 December 1997 (1997-12-02), pages 777-780, XP010264273 ISBN: 0-7803-4365-4 | 18-20 | |
| A | * the whole document * | 1-17 | |

-/--

The present search report has been drawn up for all claims

| Place of search | Date of completion of the search | Examiner |
|---|---|---|
| THE HAGUE | 19 May 2003 | Wahrenberg, A. |

## EUROPEAN SEARCH REPORT

European Patent Office

Application Number

EP 02 25 5942

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | KIM D-W ET AL: "Adaptive motion estimation based on spatio-temporal correlation" SIGNAL PROCESSING. IMAGE COMMUNICATION, ELSEVIER SCIENCE PUBLISHERS, AMSTERDAM, NL, vol. 13, no. 2, 1 August 1998 (1998-08-01), pages 161-170, XP004129635 ISSN: 0923-5965 * paragraph [0004] * | 1-17 | |
| A | EP 0 727 910 A (THOMSON MULTIMEDIA SA) 21 August 1996 (1996-08-21) * page 4, line 6 - line 8 * * page 5, line 42 - line 45 * * figure 6 * | 1-20 | |
| A,D | US 5 737 022 A (UENO HIDEYUKI  ET AL) 7 April 1998 (1998-04-07) * figures 8A,8B * * abstract * | 1-20 | |

TECHNICAL FIELDS SEARCHED (Int.Cl.7)

The present search report has been drawn up for all claims

| Place of search | Date of completion of the search | Examiner |
|---|---|---|
| THE HAGUE | 19 May 2003 | Wahrenberg, A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 02 25 5942

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2003

| Patent document cited in search report | | Publication date | Patent family member(s) | | Publication date |
|---|---|---|---|---|---|
| EP 0727910 | A | 21-08-1996 | US | 5621467 A | 15-04-1997 |
| | | | CN | 1141561 A | 29-01-1997 |
| | | | EP | 0727910 A2 | 21-08-1996 |
| | | | JP | 8256311 A | 01-10-1996 |
| | | | SG | 73362 A1 | 20-06-2000 |
| US 5737022 | A | 07-04-1998 | JP | 6311502 A | 04-11-1994 |
| | | | JP | 2002354488 A | 06-12-2002 |

For more details about this annex : see Official Journal of the European Patent Office, No. 12/82